Europäisches Patentamt

European Patent Office

Office européen des brevets

(11) Veröffentlichungsnummer: **0 189 837**
A2

## (12) EUROPÄISCHE PATENTANMELDUNG

(21) Anmeldenummer: 86100840.7

(22) Anmeldetag: 22.01.86

(51) Int. Cl.⁴: **B 60 B 39/08**

(30) Priorität: 28.01.85 DE 8502112 U

(43) Veröffentlichungstag der Anmeldung:
06.08.86 Patentblatt 86/32

(84) Benannte Vertragsstaaten:
AT BE CH DE FR GB IT LI NL SE

(71) Anmelder: Kojellis, Siegfried
Barlskamp 20
D-2000 Hamburg 53(DE)

(72) Erfinder: Kojellis, Siegfried
Barlskamp 20
D-2000 Hamburg 53(DE)

(74) Vertreter: Glaeser, Joachim, Dipl.-Ing.
Patentanwalt Königstrasse 28
D-2000 Hamburg 50(DE)

(54) Sandstreuvorrichtung für Kraftfahrzeuge.

(57) Eine Sandstreuvorrichtung für Kraftfahrzeuge zwecks Erhöhung der Haftung zwischen Fahrzeugrädern und glattem Untergrund. Ein Sandbehälter (10) hat ein trichterförmiges Auslaufrohr (11) an seinem unteren Ende und eine am Auslaufrohr angeordnete siphonartige Umlenkstelle (12, 13), an der Druckluftdüsen (14) angeordnet sind, die den Sand aufwirbeln und in eine Rohrleitung (13) drücken, die sich ihrerseits zu einer Stelle unmittelbar vor den Rädern des Kraftfahrzeuges erstreckt.

EP 0 189 837 A2

Die Erfindung bezieht sich auf eine Sandstreuvorrichtung für Kraftfahrzeuge, um die Reibung zwischen den Fahrzeugrädern und dem Untergrund zu erhöhen.

Die Gefahren von Glatteis und Eisglätte im Straßenverkehr sind bekannt. Ebenso ist es bekannt, die Reibung eines sich bewegenden Fahrzeuges auf dem Untergrund dadurch zu verbessern, daß Sand auf die Fahrbahn gestreut wird.

Die Erfindung will eine einfache Sandstreuvorrichtung für Kraftfahrzeuge schaffen, die einfach bedient werden kann und insbesondere sehr schnell dann eingesetzt werden kann, wenn der Kraftfahrer eine Gefahr durch glatten Untergrund wahrnimmt.

Erreicht wird dies durch eine Sandstreuvorrichtung nach dem Patentanspruch. Wesentlich für die vorliegende Erfindung ist, daß der sich in dem Behälter befindliche Sand aufgewirbelt wird und mit Hilfe von Druckluft über ein Rohr an eine bestimmte Stelle gefördert wird. Die Aufwirbelung ist von besonderer Bedeutung, da dadurch sichergestellt wird, daß tatsächlich fein verteilter Sand an die Fahrbahn abgegeben wird.

Die Erfindung wird nachstehend an Hand einer Ansicht einer Sandstreuvorrichtung gemäß der Erfindung erläutert.

Mit 10 ist ein Behälter gezeigt, der an seinem oberen Teil offen ist, oder mit einfachen Mitteln verschlossen werden kann. Er wird zweckmäßigerweise mit Quarzsand gefüllt. In seinem unteren Bereich läuft dieser Behälter 10 trichterförmig zu und mündet in einem Ablaufrohr 11. Dieses wird in der Art eines Siphons zunächst einmal mit einem nach oben führenden Rohrstück 12 und einem nach unten gehenden Rohrstück 13 ausgebildet. Sowohl in dem Bereich des Rohrteiles 12 als auch in dem Bereich des Rohrteiles 13 ragen Düsen 14 hinein, die von einer Druckluftquelle gespeist werden. Die in das Rohrstück 12 hineinragende Düse wirbelt den dort vorhandenen Sand auf, so daß sich etwa gebildete Klumpen auflösen. Im Bereich des Rohres 13 wird das aufgewirbelte Material zu einer Stelle geführt, die unmittelbar vor den Rädern des Kraftfahrzeugs liegt.

Zur Betätigung der Sandstreuvorrichtung braucht lediglich die Druckluftquelle eingeschaltet zu werden. Dadurch wird der Sand aufgewirbelt und gefördert, so daß nach verhältnismäßig kurzer Zeit nach dem Betätigen der Luftdruckquelle oder dem Einschalten eines entsprechenden Ventils Sand auf die Fahrbahn aufgebracht werden kann.

Es ist möglich, daß die Druckluftquelle in der Form eines Kompressors ausgebildet wird, der aus der Batterie des Kraftfahrzeuges gespeist wird. Es ist weiterhin möglich, das Bremspedal des Kraftfahrzeuges direkt mit der Einspeisung für den Kompressor zu koppeln, so daß bei einem Bremsvorgang in diesem Falle gleichzeitig Sand auf die Fahrbahn gestreut wird.

Es ist weiterhin möglich, die vorderen Teile der Leitung 13 so auszubilden, daß sie beim Einschlagen der Vorderräder eine entsprechende Bewegung ausführen, so daß sie immer diejenige Stellen der Fahrbahn treffen, auf die die Vorderräder auffahren.

<u>Patentanspruch</u>

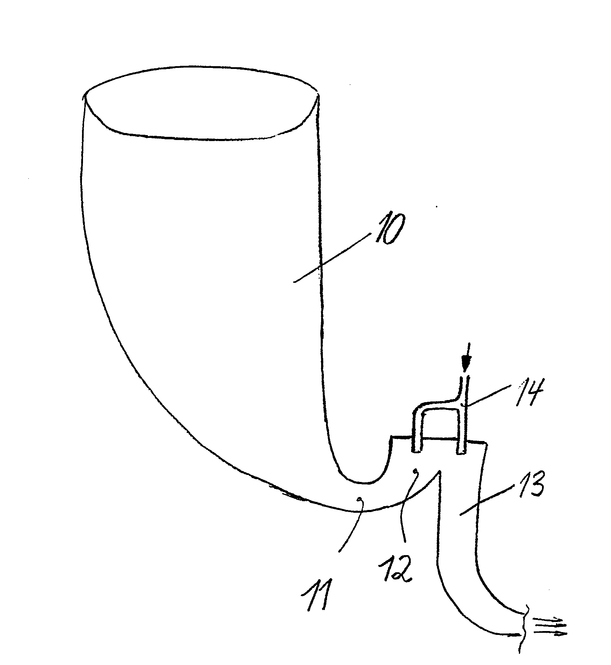

Sandstreuvorrichtung für Kraftfahrzeuge zwecks Erhöhung der Haftung zwischen Fahrzeugrädern und glattem Untergrund, gekennzeichnet durch einen Sandbehälter (10) mit trichterförmigem Auslaufrohr (11) an seinem unteren Ende und durch eine am Auslaufrohr angeordnete siphonartige Umlenkstelle (12, 13), an der Druckluftdüsen (14), angeordnet sind die den Sand aufwirbeln und in eine Rohrleitung (13) drücken, die sich ihrerseits zu einer Stelle unmittelbar vor den Rädern des Kraftfahrzeugs erstreckt.

0189837

1/1